# EUROPEAN PATENT APPLICATION

(11) **EP 4 817 920 A1**
(43) Date of publication of application: **07.10.2026**
(21) Application number: 24897316.6
(22) Date of filing: 14.11.2024
(51) Int. Cl.: B60K 13/04, B60K 11/04, F01N 3/08

(54) **WORK VEHICLE**

(30) Priority: 30.11.2023 JP 2023203202
(71) Applicant: Iseki & Co., Ltd., Matsuyama-shi, Ehime 799-2655 (JP)
(72) Inventor: KITAYAMA, Yasuharu, Iyo-gun, Ehime 791-2111 (JP); TSUKAMOTO, Kiyohiro, Iyo-gun, Ehime 791-2111 (JP)
(74) Representative: TBK
(86) International application number: PCT/JP2024/040474
(87) International publication number: WO 2025/115629

(57) **Abstract**

A work vehicle includes, on a traveling vehicle body, an exhaust gas treatment device and a urea water tank for storing urea water to be supplied to the exhaust gas treatment device. A radiator is provided between an engine and the urea water tank, thereby providing an arrangement configuration in which the urea water tank is less susceptible to exhaust heat.

## Description

### TECHNICAL FIELD

The present invention relates to a work vehicle equipped with an exhaust gas treatment device.

### BACKGROUND ART

There is a configuration in which fuel tanks are disposed on the left and right sides of a transmission case constituting a traveling vehicle body, and a urea water tank of a urea SCR system is disposed immediately in front of one of the fuel tanks (Patent Document 1).

### PRIOR ART DOCUMENTS

### PATENT DOCUMENTS

Patent Document 1: Japanese Unexamined Patent Application Publication No. 2020-93687

### SUMMARY OF INVENTION

### TECHNICAL PROBLEM

In the conventional work vehicle described above, there is a problem in that the temperature of the urea water tank increases due to the influence of exhaust heat from the engine and the outside temperature, and if the urea water deteriorates, the purification performance of the exhaust gas treatment device decreases. Accordingly, the present invention is intended to solve such a problem.

### SOLUTION TO PROBLEM

In order to solve the above-described problem, the present invention is configured as follows.

The present invention relates to a work vehicle provided with an exhaust gas treatment device on a traveling vehicle body and a urea water tank for storing urea water to be supplied to the exhaust gas treatment device, the work vehicle comprising a radiator provided between an engine and the urea water tank.

### ADVANTAGEOUS EFFECTS OF INVENTION

According to the present invention, by providing the radiator between the engine and the urea water tank, a temperature rise in the urea water tank (22) can be prevented, deterioration of the urea water is prevented, whereby purification performance can be maintained.

### BRIEF DESCRIPTION OF DRAWINGS

FIG. 1 is an overall side view of a tractor.
FIG. 2 is a front view of a front portion of the tractor.
FIG. 3 is a plan view of the front portion of the tractor.
FIG. 4 is a left side view of the front portion of the tractor.
FIG. 5 is a right side view of the front portion of the tractor.
FIG. 6 is a perspective view of the front portion of the tractor as viewed from the upper front.
FIG. 7 is a perspective view of a housing as viewed from the lower rear.
FIG. 8 is a perspective view of the housing as viewed from the upper rear.
FIG. 9 is a perspective view of a urea water tank.

### DESCRIPTION OF EMBODIMENTS

Hereinafter, an embodiment in which the present invention is applied to an agricultural tractor will be described based on the drawings.

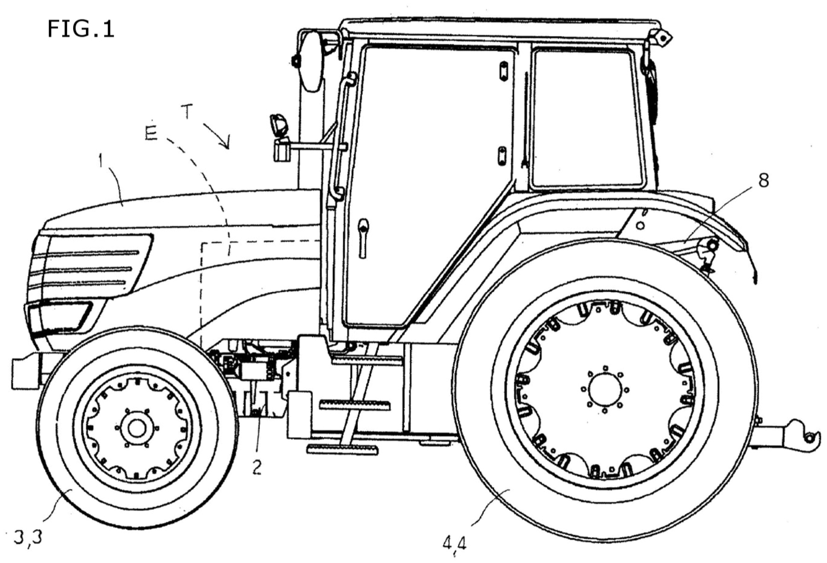

As illustrated in FIG. 1, a tractor T is provided with an engine E within a hood 1 at a front portion of a vehicle body thereof, and rotational power of the engine E is transmitted to left and right front traveling wheels 3, 3 and left and right rear traveling wheels 4, 4 via a transmission in a transmission case 2.

In addition, a cylinder case (not illustrated) housing a hydraulic cylinder for lifting and lowering a working machine (not illustrated) is provided at an upper rear portion of the transmission case 2. Lift arms 8, 8 are pivotally supported at a rear portion of the cylinder case for vertical pivotal movement, and the lift arms 8, 8 are configured to pivot up and down by expansion and contraction operation of a piston of the hydraulic cylinder. Further, a three-point link mechanism (not illustrated) including an upper link and left and right lower links is provided at a rear portion of the transmission case 2 for connecting various working machines.

In addition, a steering column (not illustrated) is erected behind the engine E, and a steering wheel (not illustrated) is pivotally supported on an upper portion of the steering column. A floor (not illustrated) is provided on the upper side of the transmission case 2, and a forward pedal, a reverse pedal, left and right brake pedals, a clutch pedal, and an accelerator pedal are provided on the floor in a well-known configuration.

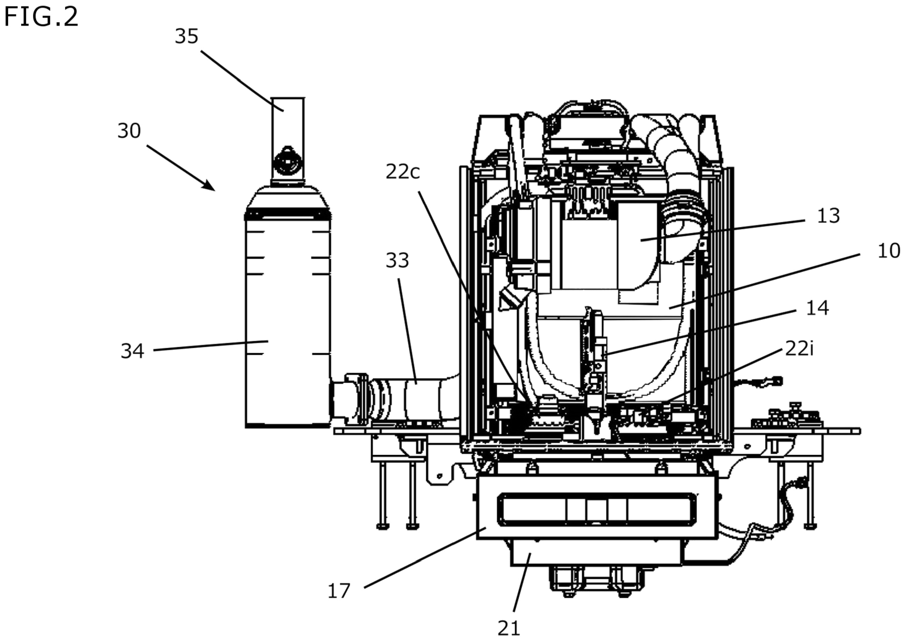

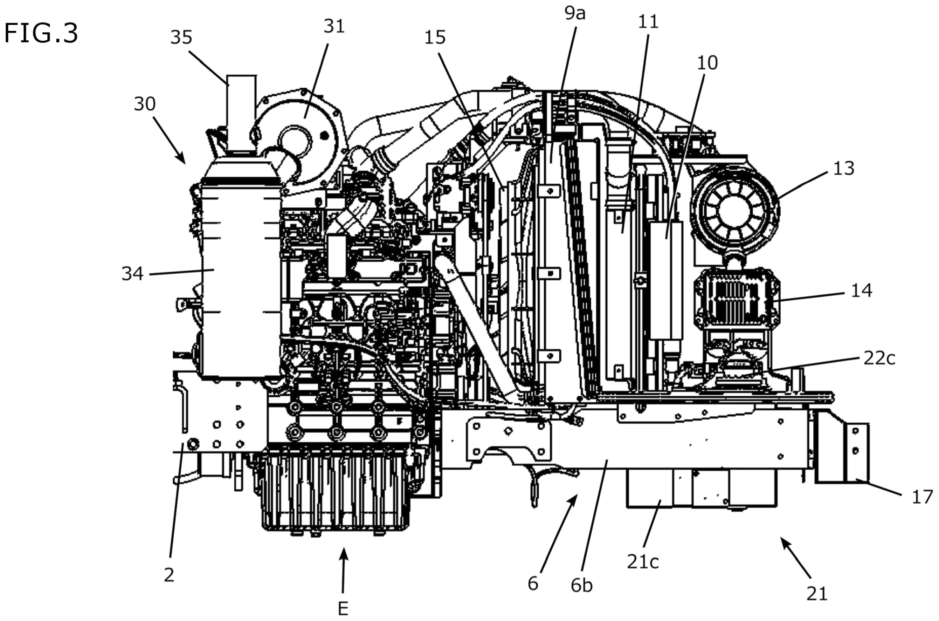

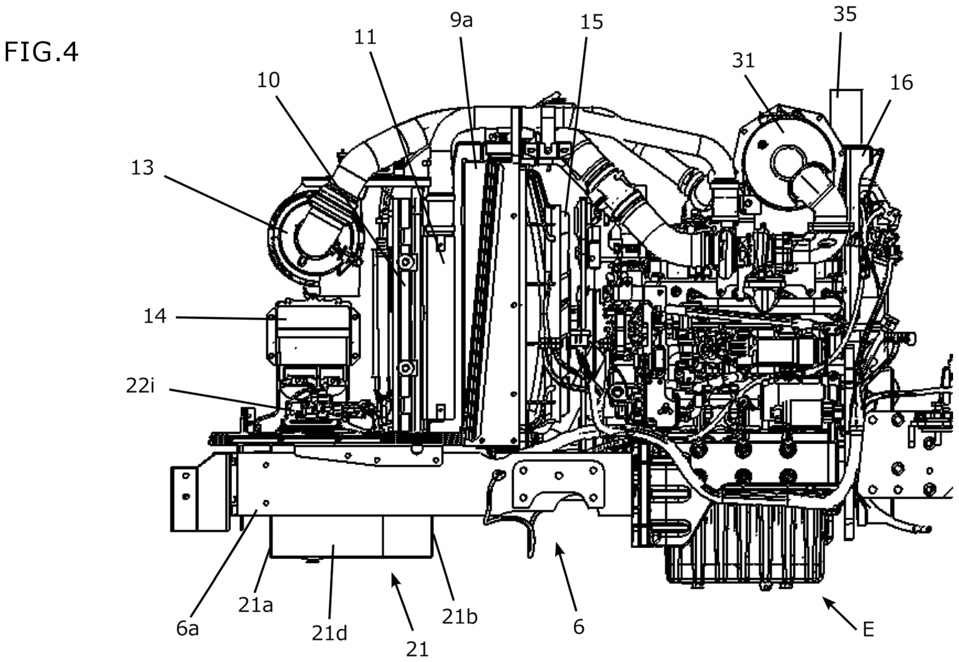

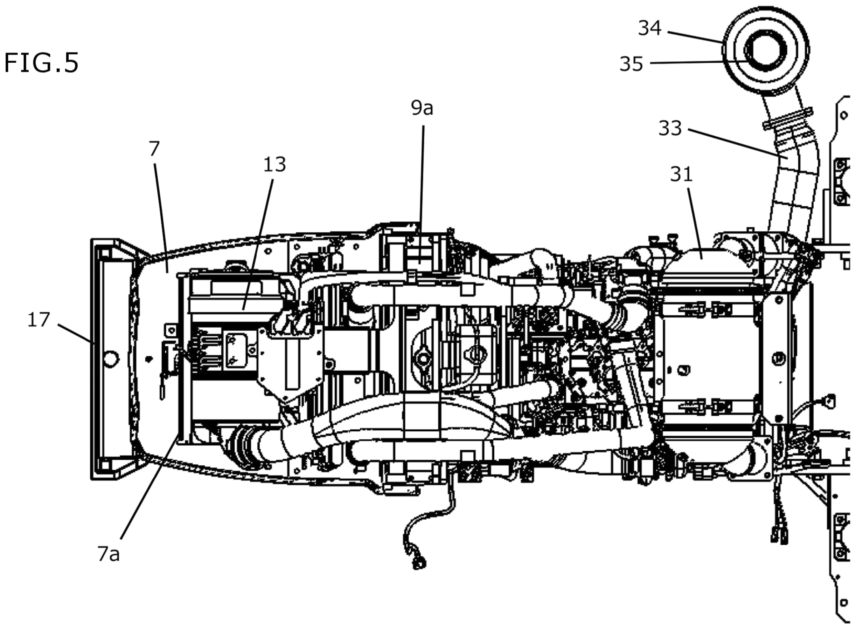

Next, an arrangement configuration of auxiliary equipment and a housing 21 within the hood 1 will be described based on FIGS. 2 to 6.

The engine E is provided on the front side of the transmission case 2, and a front frame 6 extends from the engine E. This front frame 6 is composed of left and right frames 6a, 6b and a lateral connecting frame 6c connecting front-side end portions of the left and right frames 6a, 6b. A mast 16 is provided at a rear portion of the engine E, the hood 1 is attached so as to be openable and closable, and the engine E is mounted on the rear side of the front frame 6. At a rear portion of the front frame 6, a radiator 9 is provided so as to be positioned in front of the engine E; an oil cooler 12 is provided at an upper front portion of the radiator 9; an intercooler 11 is provided in front of the oil cooler 12; and a condenser 10 is disposed in front of the intercooler 11.

Further, the housing 21 defines a rectangular space and is formed of a bottom portion 21e and side portions (21a, 21b, 21c, 21d). A first side portion 21a is provided so as to extend upwardly from the bottom portion 21e, and the housing 21 is composed of: a second side portion 21b facing the first side portion 21a; a third side portion 21c adjacent to the first side portion 21a and the second side portion 21b; and a fourth side portion 21d facing the third side portion 21c.

The bottom portion 21e of the housing 21 is positioned so as to be lower than a lower end of the radiator 9, and a distance from the first side portion 21a to the second side portion 21b falls within a distance from a front end of an engine ECU 14 to a position in front of the radiator 9. Further, the second side portion 21b is disposed so as to be positioned in front of the radiator 9 and behind the condenser 10. The third side portion 21c to the fourth side portion 21d are disposed such that the distance therebetween is smaller than the width of the condenser 10.

Then, the engine ECU 14 and an air cleaner 13 are disposed on the housing 21. Further, a cooling fan 15 is provided between the engine E and the radiator 9.

When the cooling fan 15 rotates, a weak airflow flows rearward at a central portion of the cooling fan 15, and a strong airflow flows rearward at a peripheral portion of the cooling fan 15, thereby cooling auxiliary equipment such as the radiator 9, the condenser 10, the intercooler 11, and the oil cooler 12 and cooling the engine E.

According to the above configuration, by disposing the housing 21 at a low position so as to be received in a hole portion 7a of a base plate 7, the housing 21 can be disposed lower than the auxiliary equipment such as the condenser 10, the intercooler 11, and the oil cooler 12 and the cooling fan 15. Thus, the cooling effect of the radiator 9, the condenser 10, the intercooler 11, and the oil cooler 12 can be enhanced without obstructing the flow of cooling air.

Further, by arranging the condenser 10, the intercooler 11, the oil cooler 12, and the like so as to face a peripheral portion of the cooling fan 15 that is vertically and laterally spaced apart from a rotation center thereof in a front view, the cooling effect can be enhanced.

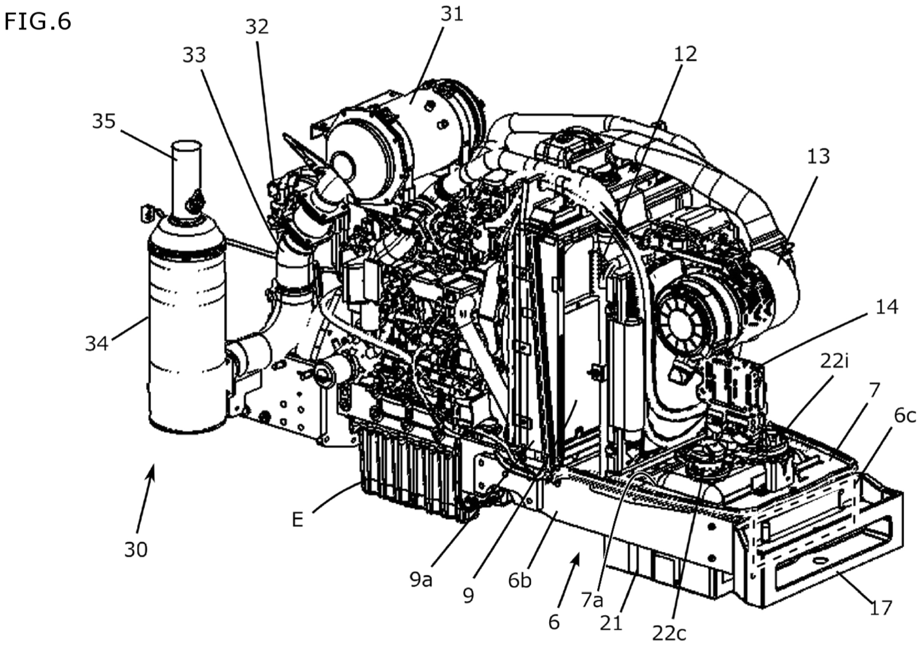

Based on FIG. 6, an arrangement configuration of the urea water tank 22 will be described.

The base plate 7 constitutes a floor portion at a front portion of the hood space. The base plate 7 is provided with a hole portion 7a, and the housing 21 is attached to the hole portion 7a. The urea water tank 22 and a supply module 23 are received in the housing 21. Further, the supply module 23 is provided so as to be offset to one lateral side with respect to a center of the machine body.

An arrangement configuration of this exhaust gas treatment device 30 will be described. As illustrated in FIG. 6 and the like, the DOC 31 is substantially cylindrical and is disposed at an upper rear portion of the engine E with its longitudinal direction oriented in the lateral direction. An SCR 34 is cylindrical and is disposed on a side of the engine E with its longitudinal direction oriented in the vertical direction, and an exhaust pipe 35 is provided on the upper surface of the SCR 34. A connection pipe 33 is a pipe for connecting the DOC 31 and the SCR 34. The DOC 31 and a dosing module 32 are connected to an upstream side of the connection pipe 33, and the SCR 34 is connected to a downstream side thereof.

The exhaust gas treatment device 30 exhausts, to the outside, exhaust gas generated by combustion in the engine E in a state in which impurities in the exhaust gas are purified. Regulated exhaust gas components oxidized by the DOC 31 pass through the connection pipe 33. Upstream of the connection pipe 33, urea water sent from the urea water tank 22 through the supply module 23 is injected by the dosing module 32, and is sent to the SCR 34 provided downstream of the connection pipe 33 and near the engine E. An exhaust pipe 35 that guides the exhaust gas to the outside is connected to an exhaust port formed in an upper portion of the SCR 34.

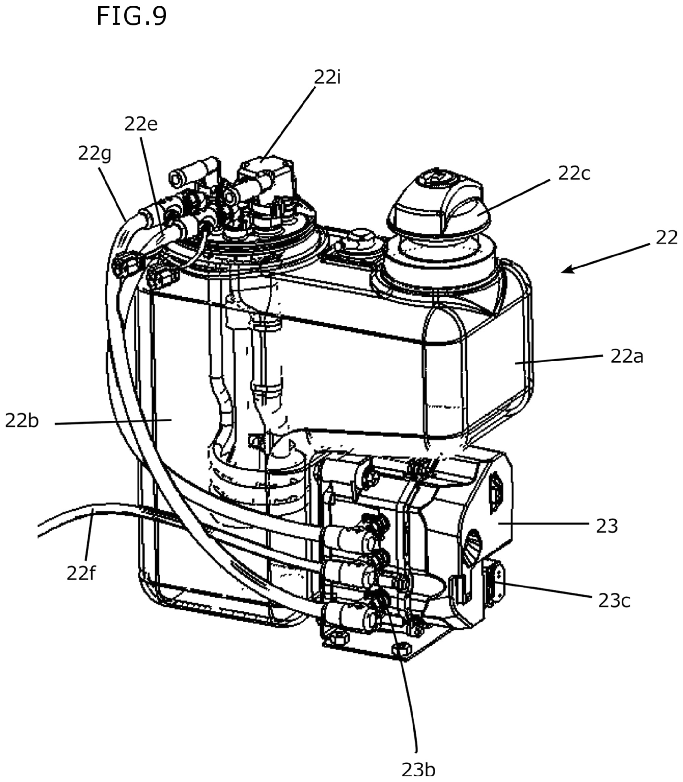

Based on FIG. 9, an arrangement configuration of the urea water tank 22 and the supply module 23 will be described.

The supply module 23 for pressure-feeding urea water to the dosing module 32 and the urea water tank 22 for storing urea water to be supplied to the supply module 23 are provided. The urea water tank 22 is composed of a side portion 22b and an upper portion 22a protruding from an upper portion of the side portion 22b, and the supply module 23 is installed such that a side surface and an upper surface thereof are covered by the urea water tank 22.

The urea water tank 22 has, on the upper surface of the upper portion 22a, a refill port 22c for refilling the urea water tank 22 with urea water, and is connected to the supply module 23 by a first hose 22e and a second hose 22g, which are flexible. The refill port 22c is provided so as to be offset to one lateral side with respect to the center of the machine body. The respective hoses include the first hose 22e for supplying urea water from the urea water tank 22 to the supply module 23, a third hose 22f for supplying urea water from the supply module 23 to the exhaust gas treatment device 30, and the second hose 22g for returning urea water, which becomes excess when the urea water is pressure-fed, to the urea water tank 22.

According to the above configuration, since the urea water tank 22 can be disposed in front of the engine E in the machine body, the urea water tank 22 is not affected by exhaust heat from the engine E. Further, by shifting the refill port 22c above the base plate 7 and away from the center of the machine body, a weight attachment part 17 can be avoided, so that refilling of urea water from the side is facilitated. Furthermore, the refill port 22c and a urea water tank hose connection portion 22i are respectively arranged so as to be deviated to one lateral side, the upper end portion of the urea water tank 22 is configured to be equal to or lower than the height of the upper end portion of the radiator 9, and the engine ECU 14 is arranged with its longitudinal direction oriented in the vertical direction so that a side surface thereof faces the front, whereby airflow entering from the front of the hood 1 is not obstructed. Therefore, the flow of cooling air is improved, and air can be efficiently sent to the radiator 9, so that the cooling effect can be enhanced. Furthermore, since the urea water tank 22 can be disposed near the supply module 23, the hoses can be made shorter than in a case where the urea water tank 22 and the supply module 23 are disposed apart from each other, resulting in cost reduction.

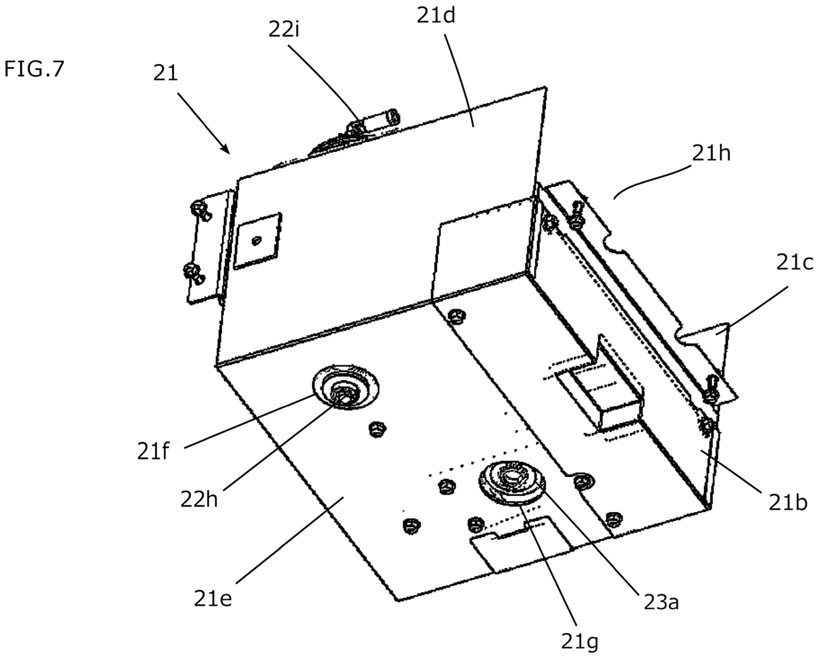

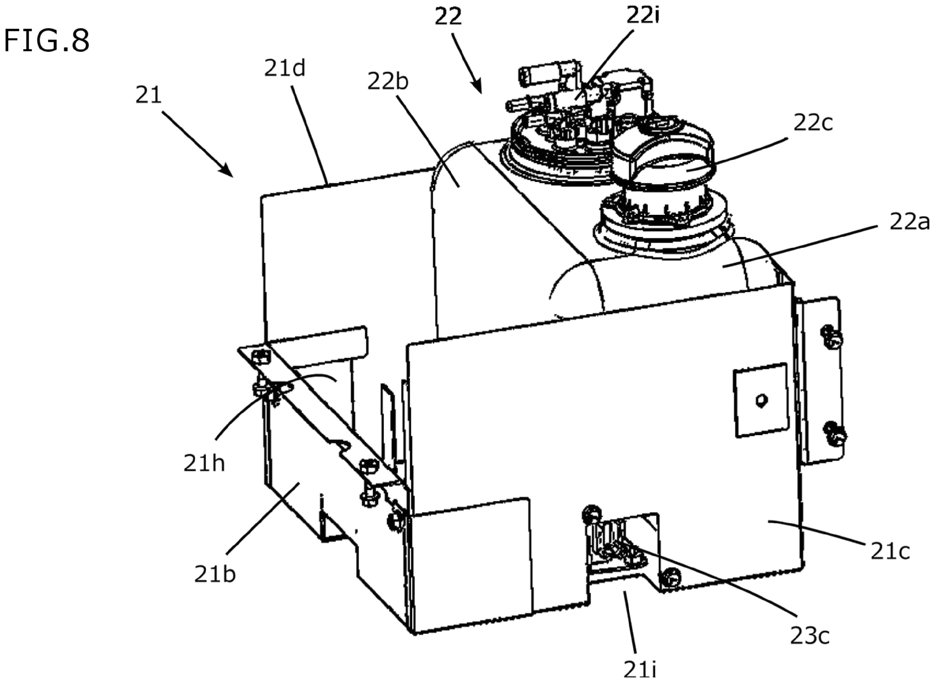

Based on FIGS. 7 to 8, the housing 21 will be described.

The housing 21 is positioned in the hole portion 7a of the base plate 7. In addition, the entire housing 21 can be removed from the base plate 7 together with the urea water tank 22 and the supply module 23. A first hole portion 21f and a second hole portion 21g are opened in the bottom portion 21e so as to be positioned below the urea water tank 22 and the supply module 23.

With these configurations, during use in a field, the urea water tank 22 and the supply module 23 are protected from mud, stones, and the like that are kicked up. Further, the lower portion of the bottom surface of the urea water tank 22 has a drain plug 22h for discharging urea water, and the first hole portion 21f is provided in the bottom portion 21e at a position facing the drain plug 22h. Thus, it is not necessary to remove the urea water tank 22 from the housing 21, and urea water can be easily discharged.

The supply module 23 has a filter replacement portion 23a for replacing a filter at a lower portion of a bottom surface thereof. Since the second hole portion 21g is provided in the bottom portion 21e at a position facing the filter replacement portion 23a, the filter can be easily replaced without having to remove the supply module 23 from the housing 21.

The housing 21 is provided with an opening 21h and a notch 21i in a wall near a supply module hose connection portion 23b and a harness connection portion 23c. With the above configuration, connection and disconnection of the respective hoses (22e, 22f, 22g) connected to the supply module 23 and of harness terminals for transmitting power and signals can be easily performed.

By arranging the urea water tank 22 and the supply module 23 close to each other, the length of the hoses can be shortened.

By making the urea water tank 22 have a shape that covers the side surface and the upper surface of the supply module 23, the supply module 23 does not protrude from the hole portion 7a of the base plate 7, so that air sent from the front portion of the hood 1 to the radiator 9 is not obstructed.

By providing the refill port 22c so as to be offset to one lateral side with respect to the center of the machine body, urea water can be more easily supplied from the lateral direction of the machine body.

### REFERENCE SIGNS LIST

T Tractor
E Engine
7 Base plate
7a Hole portion
21 Housing
22 Urea water tank
22c Refill port
23 Supply module
30 Exhaust gas treatment device

## Claims

1. A work vehicle provided with an exhaust gas treatment device on a traveling vehicle body and a urea water tank for storing urea water to be supplied to the exhaust gas treatment device, the work vehicle comprising:
a radiator provided between an engine and the urea water tank.

2. The work vehicle according to claim 1, wherein
a base plate serving as a floor portion is provided in front of the radiator,
a hole portion is provided in the base plate,
a housing is provided downward from the hole portion of the base plate, and
a supply module for supplying urea water to the exhaust gas treatment device is provided,
the supply module being housed in the housing together with the urea water tank.

3. The work vehicle according to claim 1 or 2,
wherein a refill port for refilling the urea water tank with urea water is provided within a hood at a position deviated to one lateral side from a lateral center of the vehicle body.
